Europäisches Patentamt

European Patent Office

Office européen des brevets

(11) Publication number: **0 033 792**
**B1**

(12) **EUROPEAN PATENT SPECIFICATION**

(45) Date of publication of patent specification: **26.09.84**

(21) Application number: **80300360.7**

(22) Date of filing: **07.02.80**

(51) Int. Cl.³: **C 09 K 3/30,** C 09 D 5/02

(54) Aerosol preparation.

(43) Date of publication of application:
**19.08.81 Bulletin 81/33**

(45) Publication of the grant of the patent:
**26.09.84 Bulletin 84/39**

(84) Designated Contracting States:
**CH DE FR GB IT NL**

(56) References cited:
**GB-A-1 366 593**
**GB-A-2 028 364**
**US-A-2 907 664**

(73) Proprietor: **United Industries Corporation**
**8494 Chapin, St. Louis**
**Missouri 63114 (US)**

(72) Inventor: **Albanese, James J.**
**Route 1, Box 549W,**
**Eureka Missouri (US)**

(74) Representative: **SERJEANTS**
**25 The Crescent King Street**
**Leicester, LE1 6RX (GB)**

Courier Press, Leamington Spa, England.

## Description

This invention relates in general to aerosol preparations and more particularly such preparations of water base character for providing a continuous unbroken film upon dispensing.

Heretofore, there have been innumerable, consistently unsuccessful efforts to develop an aerosol emulsion for providing a continuous, uninterrupted film or coating, whether for decorative or protective purposes, such as with paints, various types of finishes, lubricants, etc., wherein water constitutes the continuous or external phase.

It is recognized that many active ingredients for film formation may be emulsified, but to date emulsion technology has not been satisfactory for providing a continuous film in an efficacious manner. Shortcomings of existing emulsion technology are two-fold:

a) Those relating to oil in water have failed because the hydrophobic active ingredients must of necessity be in the oil phase and in this type of emulsion water is the continuous phase. Consequently, there is no molecular continuity of the active ingredient so that the resultant film would be discontinuous with uneven distribution of the active ingredient. An example would be the commercial silicone emulsions which are basically low viscosity polydimethylsiloxanes emulsified in water and in these emulsions the water is on the outside or in the continuous phase. Attempting to use such an emulsion as a mold release, for example, would have disappointing results because the silicone would be distributed unevenly upon the applied surface and the compound would not serve to bring about reliable mold release.

b) Those resultant from water in oil are due to the altered nature of the active ingredient. Though the active ingredients are in the continuous phase by the nature of the present emulsion technology, these active ingredients are altered by the presence of water and/or emulsifiers and their performance is not what would be expected should such have been applied in pure form or in solvent reduction. The active ingredients as applied are altered in appearance from the pre-emulsion state. For instance, active ingredients which have been transparent become pasty or creamy; resultant applications have been disappointing. Exemplary of this would be to prepare a silicone emulsion wherein the silicone would be in the oil or continuous phase and attempt to use this as a mold release. Experience has shown that although the distribution of the silicone may be even and continuous in this type of emulsion, the presence of the water and/or emulsifiers severely limits the release effect of the silicone. These compounds simply have not worked. When applied the silicone emulsion is paste-like or creamy in appearance and not characteristic of the transparent quality of polydimethylsiloxane which would be the preferred appearance.

The present accepted incapacity of aerosols to be useful with water based coating agents, as for example, latex paints, has been an especial problem of long standing. With present technology, aerosols that require a smooth finish or film on spraying, such as paints, silicone, or the like have utilized solvents other than water as the vehicle. Typical of such solvents are hydrocarbons, such as aromatics, aliphatics, chlorinateds, fluorinateds and the like, wherein, in most instances, the propellant is generally soluble in such solvents and may be considered chemically as part of the solvent active mixture. Thus, in effect, resort has necessarily been made to a single phase system or solution wherein the active ingredient, such as an oil-based paint, is dissolved within a suitable solvent other than water, as particularly, within a wide range of compatible organic solvents. However, the utilization of such solvents or carriers has involved inherent peril factors, as for example, aerosol paint is extremely flammable by reason of the incorporated solvent; and the majority of commercially used and available solvents have low threshold limit values that are intensified by the atomization process of the selected aerosol. Furthermore, most of these solvents have undesired ecological consequences in bringing about a further depletion of fossil fuel resources; as well as being uneconomic in light of the continual rise in cost therefor. Additionally, these solvents consistently cause unpleasant and even obnoxious odors.

There has, accordingly, been a continuing effort to solve this problem as such would eliminate immediately the recognized and reluctantly accepted hazards of using aerosol systems with respect to oil based paints, among others.

The invention provides an aerosol preparation for providing a continuous unbroken film on a substrate, the aerosol preparation comprising a water insoluble active ingredient, pre-formed into a stable or unstable emulsion, a propellant and water characterised by the features in the characterising part of claim 1.

The aerosol preparation according to the invention is both physically and chemically distinct from the customary aerosol emulsions, as well as from the single phase solutions heretofore used for film formation by oil based paints and the like. The system generally embodies immiscible phases, one of which may be considered a water phase, the other a continuous phase, which phases are normally clearly defined, sharply distinct, and separated. The active ingredient, for the purposes of this invention, is primarily in the "oil" or continuous phase, even if it is water soluble. In addition, the film controller and propellant are part of the continuous phase. However, there is also, and most critically, provided within the continuous phase a predetermined quantity of cocodiethanolamide as a dispersal agent, being soluble in both of said phases but in different degrees.

The preparation will thus in its normal state be unhomogenized with the two phases being sharply separated.

When the preparation is to be utilized, immediately prior thereto the same is agitated and then substantially instantaneously dispensed, with the discharged material being a transitory mixture. As applied, the dispensed matter will present a continuous film upon the particular surface, uninterrupted by any type of lacunae, pores, or geometric formations so that a coating with desired thickness and being entirely continuous is developed. The present invention has been proved to be completely successful with water based paints, as well as numerous other film-producing agents.

Attention is directed to the unique dispersal agent which is critical for the development of aerosol preparations of this invention. The specific cocodiethanolamide, the properties of which are enumerated in claim 1, has been found to possess certain unexpected and surprising properties when used in a predetermined proportionality in the two phase system of the present invention. The term "cocodiethanolamide" is used hereinafter to refer to that specific form of the compound possessing the properties enumerated in claim 1.

The addition of 0.5% by weight of cocodiethanolamide to a preparation which contains an active ingredient in a stable emulsion is adequate to provide the necessary energy to cause such preparation to take on the unique characteristics of the dispersion of the present invention.

With preparations comprising an active ingredient in an unstable emulsion, the cocodiethanolamide must be added in a quantity sufficient to provide the necessary energy to render the emulsion stable and then to progress therebeyond to the unusual and unexpected dispersion state developed by the present invention. It is understood that the emulsified conditions of such active ingredients, that is whether the same are in stable or unstable state and to what degree, may be readily determined by well-known, widely practiced technology so that as the cocodiethanolamide is added to unstable emulsions one may determine when the point of stability has been reached and then proceed with further incorporation of cocodiethanolamide to attain the dispersion with the resultant preparation having the predetermined characteristics.

It should be, of course, understood that with unstable emulsions as herein discussed, generally accepted emulsifying agents may be used for rendering such systems stable, with the cocodiethanolamide being added thereafter. Consequently, nothing herein is to be interpreted as requiring the use of cocodiethanolamide for raising the energy level of unstable emulsions to that of stable emulsions. The primary point is that cocodiethanolamide provides its unique dispersal function only after the particular emulsion has reached a state of stability.

Illustrative of the foregoing is the utilization of cocodiethanolamide with latex paints which comprehend paints which are stable emulsions as well as those which have varying degrees of instability. The addition of cocodiethanolamide in an amount of no less than 0.5% to stable emulsions creates the necessary dispersion so that the particular paints are rendered amenable for aerosolization in conjunction with the other prerequisites of the invention. Similarly, with paints which are in unstable emulsions the addition of sufficient cocodiethanolamide to render same stable plus at least 0.5% by weight thereabove adapt same to constitute an aerosol preparation which thus may be sprayed without foams, film rupture and the like and create a continuous unbroken coating or film upon the applied surface.

The foregoing clearly demonstrates that the specific emulsifiers in latex paint have provided energy that cocodiethanolamide would have had to supply to achieve a stable emulsion had such not been present. This energy is added to that of the cocodiethanolamide and with the prescribed addition thereof, as in the order of 0.5% to stable emulsions, incorporating sufficient energy to change the stable emulsions into the dispersions suitable for the present invention.

Another example is provided by silicone emulsions* which are useful in developing a hard surface polish. Such silicone emulsions are generally stable so that the mere addition of 0.5% by weight of cocodiethanolamide will alter the character of the stable emulsion from oil in water so that the oil is now in the continuous phase. Such addition will also change the emulsion to the dispersion for the present invention so that the resultant film presented upon application of the particular preparation will be transparent and not creamy like an emulsion indicating that physical and chemical changes have occurred.

However, even though the foregoing has disclosed that 0.5% of the cocodiethanolamide added to a stable emulsion will endow the preparation with attributes hitherto unachieved in this manner, the cocodiethanolamide may be added in an amount up to but not to exceed 10% and the increased amount will provide desired characteristics, such as, for instance, the degree of cohesiveness, and the particular thickness of the resultant film as may be shown, such amounts within the range of 0.5 to 10% by

---

*Emulsions offered by General Electric Co. of Waterford, New York as SM2033, SM2035, etc.

weight of the preparation being easily experimentally determined.

Active ingredients peculiarly adapted for incorporation in aerosol preparations of the present invention may be water insoluble and comprehend the active phase of water-base paints commonly referred to as latex paints, exemplary of which are acrylic emulsions, vinyl emulsions, vinyl copolymer acetate emulsions, alkyd emulsions and polyurethane emulsions; mold release and lubricating agents, as for instance, silicones, namely the alkyl polysiloxanes and alkyl polyorganosiloxanes; lecithin and other soya or animal fat derivatives; stearates, telefluoromers, as Teflon*; also synthetic lubricants, such as butyoxylated and ethoxylated glycols; as well as polybutene used for transmission belt dressing, etc; and various common greases, such as lithium stearate, calcium stearate, petroleum, aluminum naphthenate, and the like for utilization as lubricant coatings; moreover, mineral seal oil, as both a penetrant and a lubricant, as well as petroleum based hydrocarbon oils and synthetic oils are amenable to incorporation in preparations of the present invention. A further category of active ingredients would be constituted of the waxes, including animal waxes, such as beeswax and stearic acid; vegetable waxes, such as carnauba, bayberry and candelilla, as well as the various artificial or synthetic waxes as obtained from distillation of paraffin base petroleum. The foregoing enumerated types and examples of active ingredients for forming constituents of aerosol preparations of this invention is not meant to be exhaustive but merely indicative of the comprehensive range of compounds which by virtue of the uniqueness of this invention may now be aerosolized in water borne systems to provide a continuous film which was heretofore deemed impossible through such aerosolization. All these compositions are of the type wherein the intended usage or purpose requires an unbroken coating.

The invention is also applicable to water soluble active ingredients, as set out in the characterising part of claim 7. Water soluble compounds suitable for the invention are illustrated by:

methoxy polyethylene glycols useful for lubricants and as ointment bases for cosmetics and pharmaceuticals;
water soluble resins, such as hydroxyethyl celluloses and ethylene copolymers useful for coatings, paints, adhesives, caulking compounds, and for textile operations;
water soluble herbicides, such as paraquat, diethanolamine salt of 2,4-dichlorophenoxy acetic acid, diethanolamine salt of 2-(2-methyl-4-chlorophenoxy) propionic acid; and
water soluble alkyl glycols and alkyl esters encompassing butoxylated and ethoxylated groups used for lubrication, hydraulic fluids, and for cosmetic and pharmaceutical applications.

Accordingly, the range of treatments is infinite when it is recognized that such preparations can provide lubrication, mold release, adhesives, sealants, water displacement sprays, wax coatings, polymeric finishes, such as for floors and like surfaces; inks and dyes; asphaltic undercoatings polyurethane coatings, and paints.

The particular propellants embodied in aerosol preparations of the present invention are of generally accepted types, that is liquefied, such as, hydrocarbons or halocarbons, as fluorocarbons, and blends of the same, or compressed gases, or combinations of liquefied and compressed gases. The selection of the foregoing is dependent upon desired characteristics relating to evaporation rate, solubility, economics, pressure and safety. The well known fluorocarbon 12 and fluorocarbon 114 are exemplary of halocarbon propellants equally useful. Generally the hydrocarbon propellants are liquefied petroleum gases, such as propane, butane and isobutane, such being more popular at the present time than the halocarbons due to the possible environmental effects thereof.

Also, compressed gas propellants, such as carbon dioxide, nitrogen, nitrous oxide, and dimethyl ether may be used with the same facility as with other aerosol preparations but with attention, of course, directed to such considerations as stability and pressure requirements for selection determination.

It is to be understood that the choice of propellant in the present invention is indicated by the same considerations as in aerosol preparations generally and, thus, the precise propellant does not form a part of the present invention.

In order to control the manner in which the propellant leaves the film so that a foam is not created and with the resultant film having the desired leveling characteristics of being relatively smooth and even, with molecular continuity of the active ingredient, a film controlling agent or so-called "film controller" is utilized. As will be developed herein the use of a "film controller" thus obviates the utilization of organic auxiliary solvents. These film controlling agents are of such character that the active ingredients may be substantially insoluble therein. Additionally, such film controlling agents possess an initial boiling point about 300°F (149°C) assuring that the water within the film will evaporate at an earlier stage. Although the precise mode of reaction is not fully understood, it is believed that the molecular structure of such film controlling agents exert a repressive effect upon the propellant so

---

*Teflon is a trademark of E. I. DuPont De Nemours & Co., Inc. for tetrafluoroethylene resins.

as to influence the manner in which the propellant leaves the film. Thus, the inclusion of the novel film controllers in the present preparation in conjunction with the dispersal agent within the range stated in some manner synergistically provides the resultant film with the smooth unbroken character, devoid of pores and other geometric formations associated with foams.

Among the agents suitable for controlling the propellant in the manner above described are mineral oils with boiling points above 300°F (149°C) including white oils, such as DRAKEOL*#7, paraffinic oils, and isoparaffinic oils;

including glycols with initial boiling points above 350°F (177°C), such as propylene glycol, ethylene glycol, hexylene glycol, dipropylene glycol, diethylene glycol and triethylene glycol;
including glycol ethers with initial boiling points above 350°F (177°C), such as dipropylene glycol monoethyl ether, diethylene glycol monoethyl ether, diethylene glycol monomethyl ether, diethylene glycol monobutyl ether and tripropylene glycol monoethyl ether; and
including aromatic blends or composition solvents containing a high content of aromatic hydrocarbons with initial boiling points above 360°F (182°C), such as HI-SOL 15**. Such so-called film controllers need not possess solvency for the propellant and thus obviate utilization of the heretofore widespread use of organic auxiliary solvents for propellants. If the active ingredient is hydrophobic, it need not be fully soluble in either the propellant or the film controller. It is understood that an inadvertent low degree of solubility of the active ingredient may be tolerated but such is not preferred unless the active ingredient is water soluble. Thus, if during production it was discovered that the active ingredient and the film controlling agent were incompatible, that is, productive of a precipitate, the same directly, but with the said agent being incorporated subsequent to the inclusion of the water.

These film controllers also allow for another unique property of this invention, that is, the ability to aerosolize active ingredients which are soluble in water but in the past have been more efficaciously delivered in solvent systems. An example of this would be water soluble her-

*DRAKEOL is a trademark of Pennreco, Inc. to identify a series of white mineral oils, colorless, odorless and tasteless hydrocarbon distillates meeting the U.S.P. XV and N.F. X requirements for "petroleum liquidum".
**HI-SOL is a trademark of Ashland Chemical Company for aromatic petroleum solvents.

bicides, wherein a typical spray would produce beading on the foilage and consequently poor coverage for the herbicide. The nature of this invention is such that the herbicide can now be delivered onto the foliage with molecular continuity, that is, in a smooth, unbroken film making the herbicide much more efficacious. The mechanism that accomplishes this is not fully understood but it is necessary for the active ingredients to be soluble in the film controllers *or* the propellants to allow the invention to work as expected rather than delivering either foam or an uneven or broken film that would be expected in a situation where the active ingredient was fully soluble in the water and a film controller was not present.

Thus, in the present invention the solubility of the propellant in the film controlling agent is a matter of indifference since herein the manner of departure of the propellant from the film is dependent upon a mechanism quite distinct from solution formation. Film controlling agents within an amount less than 1% by weight have not demonstrated the capacity to act efficaciously with the propellant and, similarly, levels above 20% appear to have an adverse effect in controlling the departure of the propellant.

Example I
The following formula is merely illustrative of the aerosolization of latex paints in accordance with the present invention:

|  | Percent by weight |
| --- | --- |
| Active Ingredient Latex Paint | 60% |
| Dispersal Agent Cocodiethanolamide | 1% |
| Film Controlling Agent White Mineral Oil | 7% |
| Propellant Propane | 15% |
| Water | 13% |

In the foregoing example, it is to be observed that the dispersal agent is in the approximate amount of 1% which is quite adequate in view of the fact that the latex paint is a stable emulsion so that a lesser amount of the dispersal agent is needed to provide the energy for effecting the requisite dispersion than in those systems wherein the active ingredient is not in an emulsion. The particular amount of the dispersal agent being greater than 0.5% is in the stated proportionality to provide a certain desired cohesiveness and thickness to the resultant film.

Example II

This following formula is fundamentally along the lines of the preceding example in demonstrating the applicability of the present invention for use with active ingredients which are in an emulsion:

| | Percent by weight |
|---|---|
| Active Ingredient Silicone Emulsion* | 69.5% |
| Dispersal Agent Cocodiethanolamide | 0.5% |
| Film Controlling Agent DRAKEOL #7 | 10% |
| Propellant Isobutane | 20% |

The foregoing does not require the addition of water in view of the inclusion of the same within the emulsion of the active ingredient. The dispersal agent is included in the minimal amount to bring about a dispersion in view of the fact that the active ingredient is in a stable emulsion. Also in this particular formula the film controlling agent is added after or with the dispersal agent in view of its lack of compatibility with the particular active ingredient in its emulsion.

In studying the foregoing formulae it will be appreciated that there has been no indication of the inclusion of customary preservatives and anti-corrosion agents; the use of which would be pursuant to the usual considerations and in keeping with customary techniques.

The formulations herewith submitted serve to demonstrate the broad range of active ingredients that may be incorporated in preparations of this invention for continuous film formation. It is understood that all of the various propellants and film controllers set forth in the foregoing as examples are equally effective as are the corresponding components set forth in the specific examples which latter establish the effectiveness of the present invention for many purposes.

The production of aerosol preparations conforming to the present invention may be effected in most facile manners, with all involved steps being generally undertaken under normal ambient conditions and thus obviating the necessity of environmentally controlled conditions.

One such procedure is:—the continuous phase is first prepared by intermixing the parti-

*Typical silicone emulsions are the preparations of General Electric Co. identified as SM2033 and SM2035 which are silicones of different viscosities; which latter may be in a 50:50 relationship in this formulation.

cular active ingredient in the indicated proportion and the selected film controller or film controlling agent when the same are compatible; that is, wherein upon intermixture a precipitate or other undesired chemical reaction does not result. There is then added to the mixture the requisite amount of the dispersal agent, cocodiethanolamide, with intermixing being continued. As thus prepared the active ingredient phase is subjected to agitation during which the prescribed quantity of water is blended in and agitation is maintained to effect an intermixture of the phases. The ultimate dispensing container is then filled, in accordance with present technology, with the intermixture which has been maintained in an agitated state to the point of filling. Thus, the propellant is the last constituent to be introduced. Substantially instantaneously upon discontinuance of the agitation, the water phase and the active ingredient phase will separate and remain in such separated state pending subsequent agitation immediately prior to dispensing.

However, in the event the particular active ingredient and the film controlling agent are not compatible, that is, wherein the same upon intermixture would tend to cause a precipitate to form or some other unwanted chemical reaction, the film controlling agent is not added until after the water has been provided. By introducing the film controlling agent at this particular stage, the formation of a precipitate is obviated. Examples I II hereinabove are, as stated, demonstrative of formulations wherein a precipitate would form upon the intermixture of the active ingredient and the film controlling agent so that in developing the aerosol preparations of said formulations the film controlling agent is added after the water has been incorporated. The procedure for developing any of the many formulations embodying the present invention is accomplished in an economical manner, being fully suitable for high volume production, so as to obviate expenditure for complex, costly equipment or the maintenance of close tolerance conditions.

Immediately prior to a proposed usage, the container for the particular preparation is manually agitated by the user which brings about a transitory mixture of the two phases being, in essence, a quick or temporary dispersion in which state the discharge occurs. Upon discontinuing discharging the phases promptly separate into the normal, basically two phase condition and remain in such state pending subsequent discharge. Thus, the shelf life of aerosol preparations as developed herein is extensive since the cyclic mixing and separation as developed through use and through non-use has no deleterious effect upon the ingredients and the phases so that regardless of the passage of time the continuous film produced by this invention is assured.

As developed hereinabove, aerosol preparations are formulated according to the present invention wherein the active ingredient is in an emulsion in its pre-preparation state Thus, the water-base paints are recognized as being in emulsions, but the water insoluble active ingredients herein identified are also to be pre-emulsified. Recognizedly, in view of the water content of any such pre-emulsions, the water constituent of the preparation of the present invention will be, accordingly, affected.

Thus, the following will constitute general formulae depending upon the nature of the propellant used for those active ingredients which have been pre-emulsified, all as should be apparent from the above disclosure.

In those preparations wherein the propellants are liquefied, namely from the group consisting of hydrocarbons and halocarbons, the following is applicable:

|  | Percent by weight |
|---|---|
| Active Ingredient In Emulsions (Excluding Any Solvent in the Emulsion) | Approx. 1% to 93.5% |
| Propellant (Liquefied) | Approx. 5% to 30% |
| Dispersal Agent Cocodiethanolamide | 0.5% to 10% |
| Film Controlling Agent | Approx. 1% to 20% |
| Water | 0 to Approx. 92.5% |

In those preparations wherein compressed gas constitutes the propellant, the general formulation will be as follows:

|  | Percent by weight |
|---|---|
| Active Ingredient In Emulsions (Excluding Any Solvent in the Emulsion) | Approx. 1% to 94.5% |
| Propellant (Gaseous) | Approx. 2% to 5% |
| Dispersal Agent Cocodiethanolamide | 0.5% to 10% |
| Film Controlling Agent | Approx. 1% to 20% |
| Water | 0 to Approx. 89.5% |

In those preparations wherein the propellant is constituted of a combination of the liquefied and compressed gases, the general formula will be as follows:

|  | Percent by weight |
|---|---|
| Active Ingredient In Emulsions (Excluding Any Solvent in the Emulsion) | Approx. 1% to 94.3% |
| Propellant Liquefied | Approx. 2% to 30% |
| Gaseous | Approx. .1% to 5% |
| Dispersal Agent Cocodiethanolamide | 0.5% to 10% |
| Film Controlling Agent | Approx. 1% to 20% |
| Water | 0 to Approx. 89.3% |

**Claims**

1. An aerosol preparation for providing a continuous unbroken film on a substrate, the aerosol preparation comprising a water insoluble active ingredient, preformed into a stable or an unstable emulsion, a propellant and water characterised in that the aerosol preparation is in the form of a dispersion and further comprises a film controlling agent and cocodiethanolamide as a dispersal agent in an amount not exceeding 10% by weight of the preparation and not less than the amount which exceeds that required to stabilize the active ingredient in an emulsion by 0.5% by weight of the preparation, the cocodiethanolamide being an amber liquid having the following properties: a congealing point of approximately 6°C, a specific gravity at 25°C of 0.99, a pH in 1% dispersion of from 8 to 9, a free fatty acid content of from 3% to 4% maximum analyzed as lauric acid, solubility in alcohols, glycols, ketones, esters, aromatic and aliphatic hydrocarbons and chlorinated solvents, dispersability in water at concentrations of from 1% to 2% and solubility in water at higher concentrations, a 10% solution having a high viscosity approximating a gel.

2. An aerosol preparation according to claim 1 in which the active ingredient is a water insoluble liquid or flowable powder, pre-formed into a stable or an unstable emulsion.

3. An aerosol preparation according to claim 1 in which the active ingredient is the active phase of a water-base paint.

4. An aerosol preparation according to claim 1 in which the active ingredient is a water insoluble wax, grease, polysiloxane, alkyl polysiloxane, alkyl polyorganosiloxane, polybutene, petroleum based hydrocarbon oil or synthetic oil, pre-formed into a stable or an unstable emulsion.

5. An aerosol preparation according to claim 2 or claim 4 in which the active ingredient is pre-formed into a stable emulsion.

6. An aerosol preparation according to claim 3 or claim 5 in which the cocodiethanolamide is present in an amount of from 0.5% to 2.5% by weight of the preparation.

7. An aerosol preparation for providing a continuous unbroken film on a substrate, the aerosol preparation comprising a water soluble active ingredient, a propellant and water characterized in that the aerosol preparation further comprises a film controlling agent and cocodiethanolamide as a dispersal agent in an amount not exceeding 10% by weight of the preparation but sufficient for the aerosol preparation to be in the form of a dispersion, the cocodiethanolamide being an amber liquid having the following properties: a congealing point of approximately 6°C, a specific gravity at 25°C of 0.99, a pH in 1% dispersion of from 8 to 9, a free fatty acid content of from 3% to 4% maximum analyzed as lauric acid, solubility in alcohols, glycols, ketones, esters, aromatic and aliphatic hydrocarbons and chlorinated solvents, dispersability in water at concentrations of from 1% to 2% and solubility in water at higher concentrations, a 10% solution having a high viscosity approximating a gel.

8. An aerosol preparation according to claim 7 in which the amount of cocodiethanolamide is at least 2.5% by weight of the preparation.

9. An aerosol preparation according to claim 7 or claim 8 in which the active ingredient is a methoxy polyethylene glycol, a water soluble resin, a water soluble herbicide or a water soluble alkyl glycol or alkyl ester having butoxylated or ethoxylated groups.

10. An aerosol preparation according to claim 8 or claim 9 in which the active ingredient is soluble in the propellant.

11. An aerosol preparation according to claim 8 or claim 9 in which the active ingredient is soluble in the film controlling agent.

12. An aerosol preparation according to any preceding claim in which the film controlling agent is present in an amount of from 1% to 20% by weight of the preparation.

**Revendications**

1. Préparation pour aérosol permettant d'obtenir un film continu et non interrompu sur un substrat, ladite préparation comprenant un ingrédient actif insoluble dans l'eau, pré-formé en une émulsion stable ou instable, un propulseur et de l'eau, caractérisée en ce que la préparation d'aérosol est sous la forme d'une dispersion et comprend en outre un agent régulateur de film et de la diéthanolamide de coco en tant qu'agent dispersant dans une proportion ne dépassant pas 10% en poids de la préparation et n'étant pas inférieure à la quantité qui dépasse celle qui est nécessaire pour stabiliser l'ingrédient actif dans une émulsion de 0,5% en poids de la préparation, la diéthanolamide de coco étant un liquide ambré présentant les propriétés suivantes: point de congélation d'environ 6°C, poids spécifique à 25°C de 0,99; pH dans une dispersion à 1% entre 8 et 9; teneur en acide gras libre entre 3% et 4% au maximum, analysé en tant qu'acide laurique; solubilité dans les alcools, les glycols, les cétones, les esters, les hydrocarbures aromatiques et aliphatiques et les solvants chlorés; dispersabilité dans l'eau à des concentrations de 1% à 2%; et solubilité dans l'eau à des concentrations plus élevées, une solution à 10% ayant une viscosité élevée qui se rapproche de celle d'un gel.

2. Préparation pour aérosol selon la revendication 1, caractérisée en ce que l'ingrédient actif est un liquide ou une poudre fluable insoluble dans l'eau, pré-formé en une émulsion stable ou instable.

3. Préparation pour aérosol selon la revendication 1, caractérisée en ce que l'ingrédient actif est la phase active d'une peinture à base d'eau.

4. Préparation pour aérosol selon la revendication 1, caractérisée en ce que l'ingrédient actif est une cire insoluble dans l'eau, une graisse, un polysiloxane, un alkyl polysiloxane, un alkyl polyorganopolysiloxane, un polybutène, une huile d'hydrocarbure de pétrole ou d'une huile synthétique, pré-formé en une émulsion stable ou instable.

5. Préparation pour aérosol selon la revendication 2 ou 4, caractérisée en ce que l'ingrédient actif est pré-formé en une émulsion stable.

6. Préparation pour aérosol selon la revendication 3 ou 5, caractérisée en ce que la diéthanolamide de coco est présente dans une proportion allant de 0,5% à 2,5% en poids de la préparation.

7. Préparation pour aérosol permettant d'obtenir un film continu et non interrompu sur un substrat, ladite préparation comprenant un ingrédient actif soluble dans l'eau, un propulseur et de l'eau, caractérisée en ce que la préparation pour aérosol comprend en outre un agent régulateur de film et de la diéthanolamide de coco en tant qu'agent dispersant dans une proportion ne dépassant pas 10% en poids de la préparation, mais suffisante pour que la préparation pour aérosol soit sous forme d'une dispersion, la diéthanolamide de coco étant un liquide ambré présentant les propriétés suivantes: point de congélation d'environ 6°C, poids spécifique à 25°C de 0,99; pH dans une dispersion à 1%, de 8 à 9; teneur en acide gras libre de 3% à 4% au maximum, analysé en tant qu'acide laurique; solubilité dans les alcools, les glycols, les cétones, les esters, les hydrocarbures aromatiques et aliphatiques et les solvants chlorés; dispersabilité dans l'eau à des concentrations comprises de 1% à 2%; et solubilité dans l'eau à des concentrations plus élevées, une solution à 10% ayant une viscosité élevée qui se rapproche de celle d'un gel.

8. Préparation pour aérosol selon la revendication 7, caractérisée en ce que la diéthanolamide de coco représente au moins 2,5% en poids de la préparation.

9. Préparation pour aérosol selon la revendication 7 ou 8, caractérisée en ce que l'ingrédient actif est un méthoxy polyéthylène glycol, ou une résine soluble dans l'eau, un herbicide soluble dans l'eau ou un alkyl glycol ou ester d'alkyle soluble dans l'eau comprenant des groupes butoxylés ou éthoxylés.

10. Préparation pour aérosol selon la revendication 8 ou 9, caractérisée en ce que l'ingrédient actif est soluble dans le propulseur.

11. Préparation pour aérosol selon la revendication 8 ou 9, caractérisée en ce que l'ingrédient actif est soluble dans l'agent régulateur de film.

12. Préparation pour aérosol selon l'une quelconque des revendications précédentes, caractérisée en ce que l'agent régulateur de film est présent dans une proportion allant de 1% à 20% en poids de la préparation.

**Patentansprüche**

1. Aerosol-Präparat zum Herstellen eines kontinuierlichen, ununterbrochenen Films auf einem Substrat, wobei das Aerosol-Präparat einem wasserunlöslichen aktiven Bestandteil, der bereits in eine stabile oder instabile Emulsion überführt wurde, ein Treibmittel und Wasser aufweist, dadurch gekennzeichnet, daß das Aerosol-Präparat in Form einer Dispersion vorliegt und ferner ein filmsteuerndes Agens und Cocodiethanolamid als Dispersionsmittel in 10 Gew.-% Präparation nicht übersteigender Menge und nicht weniger als der Menge, die die zur Stabilisierung des aktiven Bestandteils in der Emulsion benötigte um 0,5 Gew.-% der Präparation übersteigt, aufweist, wobei das Cocodiethanolamid eine bernsteingelbe Flüssigkeit mit folgenden Eigenschaften ist: einem Erstarrungspunkt von etwa 6°C, einer spezifischen Dichte bei 25°C von 0,99; einen pH-Wert von 8 bis 9 in 1%-iger Dispersion, einem Maximalgehalt an freien Fettsäuren, analysiert als Laurinsäure, von 3% bis 4%; löslich in Alkoholen, Glykolen, Ketonen, Estern, aromatischen und aliphatischen Kohlenwasserstoffen und chlorierten Lösungsmitteln; in Wasser in Konzentrationen zwischen 1 bis 2% dispergierbar, in höheren Konzentrationen wasserlöslich, wobei eine 10%-ige Lösung hochviskos, annähernd ein Gel, ist.

2. Aerosol-Präparat gemäß Anspruch 1, in dem der aktive Bestandteil eine wasserunlösliche Flüssigkeit oder fließfähiges Pulver ist, das bereits in eine stabile oder unstabile Emulsion überführt ist.

3. Aerosol-Präparat gemäß Anspruch 1, in dem der aktive Bestandteil die aktive Phase einer Farbe auf Wasser-Basis ist.

4. Aerosol-Präparat nach Anspruch 1, in dem der aktive Bestandteil ein wasserunlösliches Wachs, Fett, Polysiloxan, Alkylpolysiloxan, Alkylpolyorganosiloxan, Polybuten, Kohlenwasserstofföl auf Erdölbasis oder synthetisches Öl, bereits in eine stabile oder eine instabile Emulsion überführt, ist.

5. Aerosol-Präparat nach Anspruch 2 oder Anspruch 4, in dem der aktive Bestandteil bereits in eine stabile Emulsion überführt worden ist.

6. Aerosol-Präparat nach Anspruch 3 oder Anspruch 5, in dem das Cocodiethanolamid in einer Menge von zwischen 0,5 bis 2,5 Gew.-% des Präparats anwesend ist.

7. Aerosol-Präparat zum Herstellen eines kontinuierlichen, ununterbrochenen Films auf einem Substrat, wobei das Aerosol-Präparat einen wasserlöslichen aktiven Bestandteil, ein Treibmittel und Wasser aufweist, dadurch gekennzeichnet, daß das Aerosol-Präparat ferner ein filmsteuerndes Agens, Cocodiethanolamid als Dispersionsmittel in einer 10 Gew.-% des Präparats nicht übersteigenden Menge, aber für die Dispersionsform der Aerosol-Präparation hinreichenden Menge aufweist, wobei das Cocodiethanolamid eine bernsteingelbe Flüssigkeit mit folgenden Eigenschaften ist: einem Erstrarrungspunkt von etwa 6°C, einer spezifischen Dichte bei 25°C von 0,99; einem pH-Wert von 8 bis 9 in 1%-iger Dispersion, einem Maximalgehalt an freien Fettsäuren, analysiert als Laurinsäure, von zwischen 3% bis maximal 4%, löslich in Alkoholen, Glykolen, Ketonen, Estern, aromatischen und aliphatischen Kohlenwasserstoffen und chlorierten Lösungsmitteln, dispergierbar in Wasser in Konzentrationen von zwischen 1% bis 2% und wasserlöslich bei höheren Konzentrationen, wobei eine 10%-ige Lösung hochviskos, annähernd ein Gel, ist.

8. Aerosol-Präparat nach Anspruch 7, in dem die Menge Cocodiethanolamid mindestens 2,5 Gew.-% des Präparats beträgt.

9. Aerosol-Präparat nach Anspruch 7 oder 8, wobei der aktive Bestandteil ein Methoxypolyethylenglycol, ein wasserlösliches Harz, ein wasserlösliches Herbizid oder ein wasserlösliches Alkylglycol oder Alkylester mit butoxilierten oder ethoxilierten Gruppen, ist.

10. Aerosol-Präparat nach Anspruch 8 oder 9, wobei der aktive Bestandteil im Treibmittel löslich ist.

11. Aerosol-Präparat nach Anspruch 8 oder Anspruch 9, in dem der aktive Bestandteil im filmsteuernden Agens löslich ist.

12. Aerosol-Präparat nach einem der vorangehenden Ansprüche, in welchem das filmsteuernde Agens in einer Menge von zwischen 1 bis 20 Gew.-% des Präparats vor-handen ist.